(19) **Europäisches Patentamt / European Patent Office / Office européen des brevets**

(11) **EP 2 647 866 B1**

(12) **EUROPÄISCHE PATENTSCHRIFT**

(45) Veröffentlichungstag und Bekanntmachung des Hinweises auf die Patenterteilung:
**30.03.2016 Patentblatt 2016/13**

(51) Int Cl.:
*F16D 65/18* *(2006.01)*     *F16D 65/40* *(2006.01)*
*F16D 66/00* *(2006.01)*

(21) Anmeldenummer: **13162371.2**

(22) Anmeldetag: **04.04.2013**

(54) **Schiebesattel-Scheibenbremse eines Kraftfahrzeugs**

Sliding caliper disc brake of a motor vehicle

Frein à disque à étrier coulissant d'un véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2012 DE 102012007021**

(43) Veröffentlichungstag der Anmeldung:
**09.10.2013 Patentblatt 2013/41**

(73) Patentinhaber: **KNORR-BREMSE Systeme für Nutzfahrzeuge GmbH**
**80809 München (DE)**

(72) Erfinder:
• **Asen, Alexander**
**94428 Eichendor (DE)**
• **Fricke, Jens**
**94474 Vilshofen (DE)**
• **Iraschko, Johann**
**85301 Schweitenkirchen (DE)**
• **Peschel, Michael**
**82296 Schöngeising (DE)**
• **Stoeger, Christian**
**94474 Vilshofen (DE)**

(74) Vertreter: **Schönmann, Kurt**
**c/o Knorr-Bremse AG**
**Patentabteilung V/RG**
**Moosacher Str. 80**
**80809 München (DE)**

(56) Entgegenhaltungen:
GB-A- 2 365 086     US-B2- 7 152 716
US-B2- 8 177 308

EP 2 647 866 B1

**Beschreibung**

Die vorliegende Erfindung betrifft ein Verfahren zum Bestimmen eines vorhandenen Lüftspiels einer Schiebesattel Scheibenbremse eines Kraftfahrzeugs gemäß dem Oberbegriff des Anspruchs 1.

Aus dem Stand der Technik ist es bekannt, dass bei druckluftbetätigten Scheibenbremsen mit Schiebesattel und einer Brücke die Zuspannkraft von einem Pneumatikzylinder erzeugt und über einen Hebelmechanismus verstärkt wird.

Von dem Hebel dieses Hebelmechanismus wird die Kraft dabei über eine Brücke auf zwei Zuspannstempel verteilt, welche auf einen von der Bremsscheibe der Scheibenbremse aus betrachtet zuspannseitigen Bremsbelag wirken.

Bei einem solchen Bremsvorgang wird auch der Bremssattel relativ zur Bremsscheibe verschoben, wobei eine Reaktionskraft am Sattelrücken entsteht. Durch diese Reaktionskraft am Sattelrücken werden sowohl der zuspannseitige Bremsbelag als auch der auf der Rückseite der Bremsscheibe vorgesehene Bremsbelag gegen die Bremsscheibe gedrückt, die nach Überwindung eines zwischen Bremsscheibe und den Bremsbelägen vorhandenen Lüftspiels durch Reibung ein Bremsmoment erzeugen.

Beim anschließenden Lösen der Scheibenbremse werden die Bremsbeläge nicht aktiv vom Reibring der Bremsscheibe wegbewegt. Vielmehr wird der Freigang der Bremsscheibe, d.h. das Lüftspiel zu den Bremsbelägen durch einen Scheibenschlag oder andere dynamische Krafteinwirkungen von außen, beispielsweise in Folge von Fahrbahnunebenheiten, erzeugt.

Um ein möglichst geringes Restschleifmoment der Scheibenbremse zu erreichen und möglichst ein Heißlaufen durch permanentes Anliegen der Bremsbeläge an der Bremsscheibe zu vermeiden, dürfen die Bremsbeläge bei unbetätigter Bremse nicht an die Bremsscheibe gedrückt werden. Dafür wird üblicherweise ein Lüftspiel von etwa 0,8 mm konstruktiv vorgesehen. Während eines Bremsvorgangs wird auch die Brücke der Scheibenbremse axial zur Bremsscheibe bewegt, wobei dieser Brückenhub zunächst den Bereich des Lüftspiels überwindet. Sobald das Lüftspiel überwunden ist, erzeugt der Brückenhub die gewünschte Zuspannkraft.

Solche Scheibenbremsen, insbesondere für Nutzfahrzeuge, sind üblicherweise auch mit automatisch wirkenden, mechanischen Belagverschleißnachstellvorrichtungen ausgestattet. Diese Belagverschleißnachstellvorrichtungen wirken sehr zuverlässig und verkleinern ein zu groß gewordenes Lüftspiel. Sie sind in unterschiedlichen Ausführungen bekannt, wie z.B. mechanische Nachsteller mit automatischem Einregeln eines Reibepunkts. Dabei wird bei jeder Bremsbetätigung die Nachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Belagverschleißnachstellvorrichtung z.B. durch eine Verstellbewegung von längenveränderlichen Druckstempeln.

Ein Beispiel einer Nachstellvorrichtung beschreibt das Dokument DE 10 2004 037 771 A1.

Restschleifmomente der Radbremsen, insbesondere von Scheibenbremsen, können zu höherem Kraftstoffverbrauch führen. Darüber hinaus tritt infolge des ständigen Schleifens der Bremsbeläge ein erhöhter Bremsbelagverschleiß ein, wodurch die Wartungskosten des Fahrzeugs erhöht werden.

Ein zu großes Lüftspiel kann dazu führen, dass ein Betätigungshub, z.B. eines Bremsdrehhebels, zur Erzeugung der Zuspannkraft zu groß wird. Damit kann auch ein Luftverbrauch bei einer pneumatischen Scheibenbremse ansteigen, was auch zu einem Kraftstoffverbrauch führen kann.

So ist aus der DE 42 12 407 A1 ein Lüftspieldetektor bekannt, der zur Einstellung des Lüftspiels das Signal eines Drehwinkelsensors heranzieht. Das Ausgangssignal dieses Drehwinkelsensors gibt dabei den momentanen Belagverschleiß an. Bei jeder Veränderung dieses Ausgangssignals wird in einer Auswerteeinrichtung die Signaldifferenz zum vorangegangenen Ausgangssignal ermittelt und aus dieser Differenz das momentane Lüftspiel ermittelt.

Aus der DE 198 26 133 A1 ist ein Verfahren zur Steuerung einer Fahrzeugbremsanlage bekannt, bei dem die Einstellung eines Lüftspiels über ein Schätzverfahren bestimmt wird. Mit diesem Schätzverfahren wird dabei der Zusammenhang zwischen einem von dem Bremsbelag für eine Bremsung zurückzulegenden Weg oder einem Drehwinkel eines den Bremsbelag verschiebenden Motors und einer von einem Regler zu regelnden Größe, insbesondere eines Bremsmomentes oder einer Bremskraft, bestimmt.

Bei der DE 103 22 879 A1 wird zur Bestimmung des über eine Nachstelleinheit einzustellenden Lüftspiels eine Betriebszustands-Beobachtereinheit eingesetzt, die ein Zustandssignal erzeugt, nach dessen Wert die Einstellung der Nachstelleinheit erfolgt. Die Betriebszustands-Beobachtereinheit erfasst dabei den Zustand eines oder mehrerer Aggregate des Kraftfahrzeugs wie beispielsweise Motor, Lenksystem, Pedaleinheit oder auch Fahrbahnneigung oder Abstand vom vorausfahrenden Fahrzeug und steuert so die Größe des Lüftspiels

Dokument US 7 152 716 B2 offenbart ein Verfahren nach dem Oberbegriff des Anspruchs 1.

Für eine Einstellung des Lüftspiels, d.h. zur Verringerung des Lüftspiels bei einem zu großen Lüftspiel und zur Vergrößerung des Lüftspiels bei einem zu geringen Lüftspiel, ist es erforderlich, ein tatsächliches, vorhandenes Lüftspiel zu bestimmen.

Aufgabe der vorliegenden Erfindung ist es, den Ablauf eines solchen Bremsvorgangs und insbesondere ein Verfahren zum Bestimmen eines Lüftspiels einer Scheibenbremse weiter zu verbessern.

Diese Aufgabe wird durch ein Verfahren mit den Merkmalen des Anspruchs 1 gelöst.

Das erfindungsgemäße Verfahren bestimmt ein vorhandenes Lüftspiel aus dem gemessenen Hub der Brücke, dem an der Brücke anliegenden und vom Bremszylinder erzeugten Druck sowie aus charakteristischen Kennwerten der Scheibenbremse wie der Steifigkeit der Bremsbeläge und der Fläche des Bremszylinders. Die gemessenen Werte werden erst nach vollendeter Bremsung ausgewertet. D.h., die Auswertung erfolgt nicht in Echtzeit.

Ein erfindungsgemäßes Verfahren zum Bestimmen eines vorhandenen Lüftspiels einer Scheibenbremse, insbesondere für ein Kraftfahrzeug, umfasst die Verfahrensschritte: (S1) Erfassen eines Betätigungsdrucks der Scheibenbremse und eines Brückenhubs der Brücke der Scheibenbremse; (S2) Speichern der erfassten Messwerte nach einem Bremsvorgang in dem Bremssteuergerät; und (S3) Berechnen des vorhandenen Lüftspiels der Scheibenbremse unter Berücksichtigung der in Schritt (S2) ausgewerteten Messwerte sowie im Datenspeicher des Bremssteuergeräts hinterlegten Kennwerten der Bremsbeläge und des Bremszylinders.

Vorteilhafte Ausführungsvarianten der Erfindung sind Gegenstand der Unteransprüche.

Bei dem Verfahrensschritt (S3) werden bevorzugt als im Datenspeicher des Bremssteuergeräts hinterlegte Kennwerte der Bremsbeläge und des Bremszylinders der Ansprechdruck des Bremszylinders, die Zylinderfläche und die Gesamtsteifigkeit der Bremse herangezogen.

Es ist des Weiteren vorgesehen, dass aus dem gemessenen Betätigungsdruck (p) und den gespeicherten Kennwerte zunächst ein theoretischer Brückenhub ($h_{th}$) gemäß der Gleichung

$$h_{th} = (p - p_{AZ}) \cdot A_Z \cdot \frac{1}{k_{ges}}$$

berechnet wird.

Das Lüftspiel wird anschließend aus der Differenz des gemessenen Brückenhubs und des berechneten theoretischen Brückenhubs bestimmt.

Erfolgt die Kraftübertragung vom Bremszylinder auf die Brücke über einen Bremsdrehhebel, so ist bei der Berechnung des theoretischen Brückenhubs außerdem das Übersetzungsverhältnis des Bremsdrehhebels gemäß Gleichung

$$h_{th} = (p - p_{AZ}) \cdot A_Z \cdot \frac{i_H}{k_{ges}}$$

zu berücksichtigen.

Nachfolgend wird ein Ausführungsbeispiel der Erfindung anhand der beiliegenden Zeichnung näher erläutert. Es zeigt:

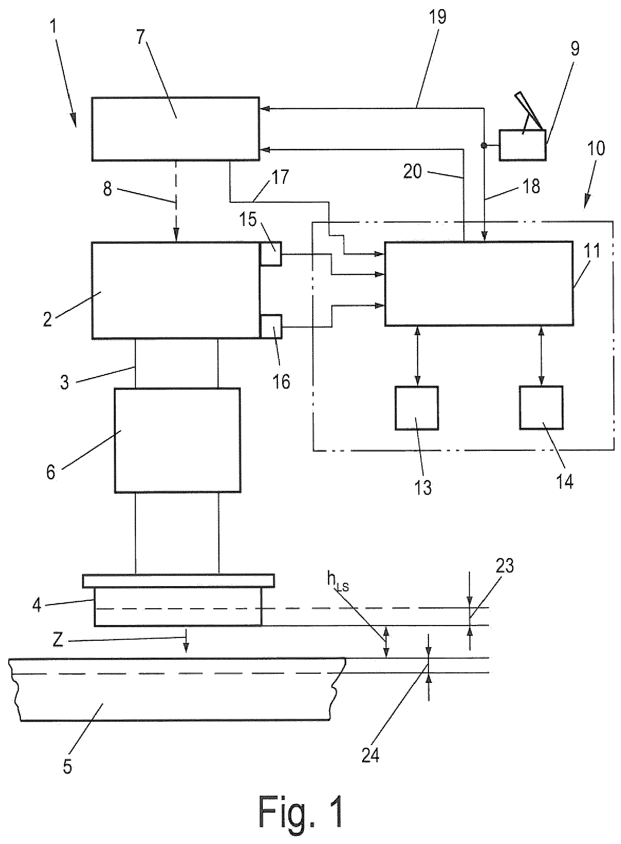

Figur 1 eine schematische Blockdarstellung eines Ausführungsbeispiels einer erfindungsgemäßen Scheibenbremse mit einer Messvorrichtung zur Durchführung eines erfindungsgemäßen Verfahrens.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, Bremssattel, Hubsensor und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

Die einzige Fig. 1 zeigt eine schematische Blockdarstellung eines Ausführungsbeispiels einer erfindungsgemäßen Scheibenbremse 1 mit einer Messvorrichtung 10 zur Durchführung eines erfindungsgemäßen Verfahrens.

Die Scheibenbremse 1 weist eine Zuspannvorrichtung 2, eine Spindeleinheit 3, eine von einem als Schiebesattel ausgebildeten Bremssattel (nicht gezeigt) übergriffene Bremsscheibe 5 und einen zuspannseitigen Bremsbelag 4 und einen rückseitigen Bremsbelag, wobei die nachfolgenden Beschreibungen hinsichtlich des Bremsbelags 4 für beide Bremsbeläge der Scheibenbremse 1 gelten.

Die Zuspannvorrichtung 2 kann z.B. ein Druckzylinder mit einem Bremsdrehhebel sein. Der Druckzylinder ist z.B. ein Druckluftzylinder einer pneumatisch betätigten Scheibenbremse 1. Die Zuspannvorrichtung 2 übt bei Betätigung eine Zuspannkraft auf den Bremsbelag 4 in einer Zuspannrichtung Z zur Bremsscheibe 5 hin aus.

Weiterhin ist der Scheibenbremse 1 ein Bremssteuergerät 7 zugeordnet, welches über eine Verbindung 8 mit der Zuspannvorrichtung 2 verbunden ist. Das Bremssteuergerät 7 kann z.B. ein so genanntes Druckregelmodul sein. In diesem Ausführungsbeispiel ist die Scheibenbremse 1 eine pneumatisch betätigte Scheibenbremse 1, bei welcher ein Druckluftzylinder über ein Steuerventil mit Druckluft bei einem Bremsvorgang zur Betätigung der Zuspannvorrichtung 2 beaufschlagt wird. Dazu symbolisiert die Verbindung 8 z.B. eine Druckluftversorgungsleitung und eine elektrische oder pneumatische Steuerleitung für das Steuerventil. Andere Ausführungen sind selbstverständlich möglich.

Das Bremssteuergerät 7 ist außerdem mit einem Bremspedal 9 über eine Pedalsignalleitung 19 gekoppelt. Die Pedalsignalleitung 19 überträgt einen Fahrerwunsch für eine Bremsung oder ein Lösen der Bremse von dem Bremspedal 9 zu dem Bremssteuergerät 7.

Die Scheibenbremse 1 umfasst in der in Fig. 1 gezeigten Ausführung außerdem eine Belagverschleißnachstellvorrichtung 6, die beispielsweise wie in der DE 10 2004 037 771 A1 beschrieben ausgestaltet ist, welcher zur Nachstellung des Bremsbelags/der Bremsbeläge bei Verschleiß dient, um ein ursprüngliches Lüftspiel wiederherzustellen. Die Belagverschleißnachstellvorrichtung 6 ist in die Spindeleinheit 3 eingesetzt und mit dieser gekoppelt.

Der zwischen dem Bremsbelag 4 und der Bremsscheibe 5 vorhandene Abstand ist ein definierter Lüftspalt und wird im Allgemeinen als Lüftspiel $h_{LS}$ bezeichnet. Das Lüftspiel $h_{LS}$ bezeichnet demnach den Abstand zwischen Bremsbelag 4 und Bremsscheibe 5 bei noch unverschlissenem Bremsbelag 4 und unverschlissener Bremsscheibe 5. Ohne Belagverschleißnachstellvorrichtung 6 würde sich mit zunehmendem Verschleiß des Bremsbelags 4 und der Bremsscheibe 5 das Lüftspiel $h_{LS}$ entsprechend vergrößern. Ein Belagverschleiß ist in Figur 1 mit dem Bezugszeichen 23 bezeichnet, ein Scheibenverschleiß mit dem Bezugszeichen 24.

Das Lüftspiel $h_{LS}$ hat die Aufgabe, ein Restschleifmoment gering zu halten, welches durch einen an der Bremsscheibe 5 ohne Lüftspiel anliegenden, schleifenden Bremsbelag 4 erzeugt werden kann. Das Restschleifmoment führt zu einem erhöhten Verschleiß von Bremsbelag 4 und Bremsscheibe 5, kann die Scheibenbremse 1 unnötig erwärmen und den Kraftstoffverbrauch eines mit der Scheibenbremse 1 ausgerüsteten Kraftfahrzeugs erhöhen.

Zudem kann das Lüftspiel einem möglichen, so genannten "Belagwachsen" des Bremsbelags 4 infolge thermischer Belastung genügend Raum geben. Das Lüftspiel $h_{LS}$ darf aber auch nicht zu groß gewählt sein, da sonst ein Betätigungshub, z.B. ein Hub eines Bremsdrehhebels, zur Erzeugung der Zuspannkraft zu groß wird. Damit verbunden würde auch ein Hub eines mit dem Bremsdrehhebel in Zusammenwirkung stehenden Druckzylinders vergrößert, was bei einem Druckluftzylinder zu erhöhtem Luftverbrauch führt. Außerdem kann sich eine Verzögerung im Ansprechen der Scheibenbremse 1 ergeben.

Bei einem Bremsvorgang wird bei Betätigung der Scheibenbremse 1 zunächst das Lüftspiel $h_{LS}$ überbrückt, indem der Bremsbelag 4 durch die Zuspannvorrichtung 2 gegen die Bremsscheibe 5 in Zuspannrichtung Z bis zum Reibepunkt verstellt wird.

Der Begriff "Reibepunkt" ist der Punkt, in welchem der Bremsbelag 4 an der Bremsscheibe 5 der Scheibenbremse 1 anliegt. Somit ist beim zugespannten Bremsbelag 4 das Lüftspiel zu Null geworden. Weiteres Zuspannen bewirkt dann durch Anpressen des Bremsbelags 4 an die Bremsscheibe 5 eine Bremsung. Ein Lösen der Zuspannvorrichtung 2 bewirkt eine Umkehrung des oben beschriebenen Vorgangs.

Die Messvorrichtung 10 dient zum Bestimmen des vorhandenen Lüftspiels $h_{LS}$ der Scheibenbremse 1. Die Messvorrichtung 10 umfasst eine Auswerteeinrichtung 11, eine Datenspeichereinrichtung 13 und eine Speichereinrichtung 14. Diese sind mit der Auswerteeinrichtung 11 verbunden. Die Speichereinrichtung 14 kann z.B. zum Speichern der aktualisierten und/oder angepassten Werte sowie der berechneten Werte der vorhandenen Lüftspiele dienen.

Eine Voraussetzung zum Bestimmen des vorhandenen Lüftspiels $h_{LS}$ ist die Erfassung eines Betätigungshubes $h_x$ und einer Betätigungskraft der Zuspannvorrichtung 2. In dem dargestellten Ausführungsbeispiel ist ein Hubsensor 15 zur Erfassung des Betätigungshubs $h_x$ einer Brücke vorgesehen, wobei die Kraft des bewegbaren Bremsdrehhebel bei einem Zuspannvorgang über die Brücke auf bevorzugt zwei Gewindestempel verteilt wird, welche auf den zuspannseitigen Bremsbelag 4 drücken. Dadurch wird die Brücke um eine Distanz $h_x$ zur Bremsscheibe 5 hin verschoben.

Die Betätigungskraft der Zuspannvorrichtung 2 wird in diesem Ausführungsbeispiel einer druckluftbetätigten Scheibenbremse 2 mit einem Drucksensor 16 gemessen. Natürlich sind auch andere Kraftaufnehmer, wie z.B. Dehnungsmessstreifen u.dgl., möglich.

Die Auswerteeinrichtung 11 ist mit dem Hubsensor 15 und dem Drucksensor 16 z.B. jeweils über eine elektrische Leitung verbunden. Der Hubsensor 15 überträgt so den von ihm gemessenen Messwert für den Betätigungshub als elektrisches Signal an die Auswerteeinrichtung 11. Der Drucksensor 16 überträgt ebenfalls ein elektrisches Signal, welches hier dem gemessenen Messwert des Betätigungsdrucks entspricht, an die Auswerteeinrichtung 11.

Außerdem steht die Auswerteeinrichtung 11 über eine Datenleitung 17 und über eine Pedalsignalleitung 18 mit dem Bremspedal 9 in Verbindung. Über die Datenleitung 17 kann die Auswerteeinrichtung 11 Daten des Bremssteuergerätes 7 abrufen, welche zu einem jeweiligen Bremsvorgang relevant sind.

Dazu gehört beispielsweise die Steifigkeit $k_{ges}$ der Bremse. Auch die Abhängigkeit dieser Größe vom Verschleißzustand der Bremsbeläge ist in dem im Bremssteuergerät 7 hinterlegten Kennfeld berücksichtigt. Weitere Daten können z.B. Zeitpunkt des Bremsbeginns, des Lösens, eine Bremsdauer, ein Bremsdruck usw. sein.

Die Pedalsignalleitung 18 ist mit der Pedalsignalleitung 19 zum Bremssteuergerät 7 verbunden und überträgt ein Signal des Bremspedals 9 direkt an die Auswerteeinrichtung 11. Weiterhin ist in diesem Ausführungsbeispiel eine Ausgangsleitung 20 der Auswerteeinrichtung 11 an das Bremssteuergerät 7 angeschlossen. Das Lüftspiel $h_{LS}$ wird, wie unten ausführlich beschrieben, von der Auswerteeinrichtung 11 bestimmt und mittels der Ausgangsleitung 20 als elektrisches Signal oder elektrischer Wert an das Bremssteuergerät 7 weitergeleitet.

Zum Bestimmen des vorhandenen Lüftspiels erhält die Auswerteeinrichtung 11 in diesem Ausführungsbeispiel Messwerte eines Betätigungsdrucks $p$ und eines Betätigungshubs $h_x$.

Aus dem gemessenen Betätigungsdruck $p$ lässt sich unter Hinzunahme von im Bremssteuergerät 7 hinterlegten Werten zunächst der theoretische Brückenhub $h_{th}$ nach der Gleichung

$$h_{th} = (p - p_{AZ}) \cdot A_Z \cdot \frac{1}{k_{ges}}$$

berechnen, der zur Berechnung des Lüftspiels $h_{LS}$ von dem Betätigungshubs $h_x$ abgezogen werden muss. Der theoretische Brückenhub $h_{th}$ erfolgt beim weiteren Zuspannen der Brücke nach Überwindung des Lüftspiels und ergibt sich aus der Steifigkeit $kg_{es}$ der Bremse, insbesondere der Bremsbeläge.

$A_Z$ ist dabei die Zylinderfläche des Bremszylinders.

Der Ansprechdruck $p_{AZ}$ tritt nach Überbrückung des Lüftspiels bei Erreichen des Reibepunkts auf. Dabei ist das vorhandene Lüftspiel überwunden. Für den Ansprechdruck $p_{AZ}$ können z.B. Einzelwerte oder/und Kennfelder hinterlegt sein. Diese hinterlegten Daten sind z.B. in der Datenspeichereinrichtung 13 gespeichert. Diese Einzelwerte und/oder Kennfelder können mithilfe von Messwerten aktualisiert und/oder angepasst werden.

Weist die Zuspannvorrichtung 2 einen Druckzylinder mit einem Bremsdrehhebel auf, so ist bei der Berechnung des theoretischen Brückenhubs $h_{th}$ die Übersetzung $i_H$ des Bremsdrehhebel entsprechend zu berücksichtigen nach

$$h_{th} = (p - p_{AZ}) \cdot A_Z \cdot \frac{i_H}{k_{ges}}$$

Zur Messung des Betätigungshubs $h_x$ der Brücke kann beispielsweise ein Hubsensor in einer Sattelöffnung des Bremssattels angeordnet sein, in der ein Verschleißsensor über eine Spindelverstellung der Spindel den Verschleiß der Bremsbeläge und der Bremsscheibe erfasst. Der Hubsensor erfasst dabei vorzugsweise eine Relativbewegung der Brücke zum Bremssattel.

Andere Positionen zur Erfassung des Betätigungshubs $h_x$ der Brücke sind ebenfalls denkbar.

**Bezugszeichenliste**

| | |
|---|---|
| 1 | Scheibenbremse |
| 2 | Zuspannvorrichtung |
| 3 | Spindeleinheit |
| 4 | Bremsbelag |
| 5 | Bremsscheibe |
| 6 | Belagverschleißnachstellvorrichtung |
| 7 | Bremssteuergerät |
| 8 | Verbindung |
| 9 | Bremspedal |
| 10 | Messvorrichtung |
| 11 | Auswerteeinrichtung |
| 13 | Datenspeichereinrichtung |
| 14 | Speichereinrichtung |
| 15 | Hubsensor |
| 16 | Drucksensor |
| 17 | Datenleitung |
| 18, 19 | Pedalsignalleitung |
| 20 | Ausgangsleitung |
| 23 | Belagverschleiß |
| 24 | Scheibenverschleiß |
| | |
| $h_{LS}$ | Lüftspiel |

## Patentansprüche

1. Verfahren zum Bestimmen eines vorhandenen Lüftspiels einer Schiebesattel-Scheibenbremse eines Kraftfahrzeugs, mit einer Zuspannvorrichtung (2) mit einem Bremszylinder, einer Brücke und mit einem auf die Brücke einwirkenden Drehhebel, einer Belagverschleißnachstellvorrichtung (6), einem Sensor (15) zur Erfassung eines Brückenhubs ($h_x$), einem Sensor (16) zur Erfassung eines Betätigungsdruckes (p), und einem Bremssteuergerät (7) mit einem Datenspeicher, einem eine Bremsscheibe (5) übergreifenden und relativ zu einem ortsfesten Bremsträger (2) und axial zur Bremsscheibe (5) verschiebbar gelagerten Bremssattel, mindestens zwei Bremsbelägen (4), wobei jeweils mindestens ein Bremsbelag (4) zuspannseitig und mindestens ein Bremsbelag (4) rückseitig der Bremsscheibe (5) angeordnet ist, **gekennzeichnet durch** die Verfahrensschritte:

   (S1) Erfassen. eines Betätigungsdrucks (p) der Scheibenbremse (1) und eines Brückenhubs ($h_x$) der Brücke der Scheibenbremse (1),
   (S2) Speichern der erfassten Messwerte nach einem Bremsvorgang in dem Bremssteuergerät (7); und
   (S3) Berechnen des vorhandenen Lüftspiels ($h_{LS}$) der Scheibenbremse (1) unter Berücksichtigung der in Schritt (S2) ausgewerteten Messwerte sowie im Datenspeicher des Bremssteuergeräts (7) hinterlegten Kennwerten der Bremsbeläge (4) und des Bremszylinders.

2. Verfahren nach Anspruch 1, **dadurch gekennzeichnet, dass** beim Verfahrensschritt (S3) als im Datenspeicher des Bremssteuergeräts (7) hinterlegte Kennwerte der Bremsbeläge (4) und des Bremszylinders der Ansprechdruck ($p_{AZ}$) des Bremszylinders, die Zylinderfläche ($A_z$) und die Gesamtsteifigkeit ($k_{ges}$) der Bremse herangezogen werden.

3. Verfahren nach Anspruch 2, **dadurch gekennzeichnet, dass** aus dem gemessenen Betätigungsdruck (p) und den gespeicherten Kennwerten zunächst ein theoretischer Brückenhub ($h_{th}$) gemäß der Gleichung

$$h_{th} = (p - p_{AZ}) \cdot A_Z \cdot \frac{1}{k_{ges}}$$

   und anschließend das Lüftspiel ($h_{LS}$) aus der Differenz des gemessenen Brückenhubs ($h_x$) und des berechneten theoretischen Brückenhubs ($h_{th}$) berechnet wird.

4. Verfahren nach Anspruch 2, **dadurch gekennzeichnet, dass** aus dem gemessenen Betätigungsdruck (p) und den gespeicherten Kennwerten zunächst ein theoretischer Brückenhub ($h_{th}$) gemäß der Gleichung

$$h_{th} = (p - p_{AZ}) \cdot A_Z \cdot \frac{i_H}{k_{ges}}$$

   und anschließend das Lüftspiel ($h_{LS}$) aus der Differenz des gemessenen Brückenhubs ($h_x$) und des berechneten theoretischen Brückenhubs ($h_{th}$) berechnet wird, wobei $i_H$ das Übersetzungsverhältnis des Drehhebels angibt.

## Claims

1. Method for determining an existing clearance of a sliding calliper disc brake of a motor vehicle, the brake comprising a brake cylinder, a bridge and a rotary lever acting on the bridge, a pad wear adjusting device (6), a sensor (15) for the detection of a bridge stroke ($h_x$), a sensor (16) for the detection of an actuating pressure (p) and a brake control unit (7) with a data memory, a brake calliper overlapping a brake disc (5) and mounted displaceably relative to a stationary adapter (2) and axially displaceably relative to the brake disc (5), at least two brake pads (4), of which at least one brake pad (4) is located on the application side and at least one brake pad (4) is located on the rear side of the brake disc (5), **characterised by** the steps of:

   (S1) the detection of an actuating pressure (p) of the disc brake (1) and of a bridge stroke ($h_x$) of the bridge of the disc brake (1);
   (S2) the storage of the measured values after a braking operation in the brake control unit (7); and
   (S3) the calculation of the existing clearance ($h_{LS}$) of the disc brake (1), taking account of the measured values evaluated in step (S2) and of characteristics of the brake pads (4) and the brake cylinder as stored in the data memory of the brake control unit (7).

2. Method according to claim 1, **characterised in that** in step (S3), the application pressure ($p_{AZ}$) of the brake cylinder, the cylinder area ($A_Z$) and the overall stiffness ($k_{ges}$) of the brake are used as characteristics of the brake pads (4) and the brake cylinder as stored in the data memory of the brake control unit (7).

3. Method according to claim 1, **characterised in that**, from the measured application pressure (p) and the stored characteristics, a theoretical bridge stroke ($h_{th}$) is first calculated according to the equation

$$h_{th} = (p - p_{AZ}) \cdot A_Z \cdot 1/k_{ges}$$

and then the clearance ($h_{LS}$) is calculated from the difference between the measured bridge stroke ($h_x$) and the calculated theoretical bridge stroke ($h_{th}$).

4. Method according to claim 2, **characterised in that**, from the measured application pressure (p) and the stored characteristics, a theoretical bridge stroke ($h_{th}$) is first calculated according to the equation

$$h_{th} = (p - p_{AZ}) \cdot A_Z \cdot i_H/k_{ges}$$

and then the clearance ($h_{LS}$) is calculated from the difference between the measured bridge stroke ($h_x$) and the calculated theoretical bridge stroke ($h_{th}$), wherein $I_H$ indicates the ratio of the rotary lever.

**Revendications**

1. Procédé à établir un jeu existant dans un frein à disque à étrier coulissant d'un véhicule automobile, comprenant un dispositif de serrage (2) muni d'un cylindre de frein, d'un pont et d'n levier rotatif agissant sur ledit pont, d'un dispositif de rattrapage de l'usure de la garniture (6), d'un détecteur (15) à détecter une course du pont ($h_x$), d'un détecteur (16) à détecteur une pression d'actionnement (p), et d'un dispositif de commande de freinage (7) à une mémoire de données, d'un étrier de frein chevauchant un disque de frein (5) et appuyé de manière déplaçable par rapport à un support de frein (2) stationnaire et en sens axial par rapport audit disque de frein (5), d'au moins deux garnitures de frein (4), dont au moins une garniture respective (4) est disposée du côté de serrage à au moins une garniture de frein (4) est disposé du côté arrière dudit disque de frein, **caractérisé par** les étapes suivantes:

(S1) détection d'une pression d'actionnement (p) dudit frein à disque (1) et d'une course de pont ($h_x$) dudit frein à disque (1),
(S2) mise en mémoire des valeurs mesurées détectées après une opération de freinage dans ledit dispositif de commande de freinage (7) ; et
(S3) calcul du jeu ($h_{LS}$) existant dans ledit frein à disque (1), in considération des valeurs mesurées évaluées dans l'étape (S2) ainsi que des valeurs caractéristiques desdites garnitures de frein (4) et dudit cylindre de frein, qui sont mise en mémoire dans ladite mémoire dudit dispositif de commande de freinage (7).

2. Procédé selon la revendication 1, **caractérisé en ce qu'**au cours de l'étape (S3) la pression de réponse ($h_{AZ}$) dudit cylindre de frein, l'aire de cylindre ($A_Z$), et la rigidité totale ($k_{ges}$) du frein sont utilisées en tant que des valeurs caractéristiques desdites garnitures de frein (4) et dudit cylindre de frein, qui sont mise en mémoire dans la mémoire de données dudit dispositif de commande de freinage (7).

3. Procédé selon la revendication 2, **caractérisé en ce que** d'abord une course de pont théorique ($h_{th}$) et calculée par dérivation de la pression d'actionnement (p) mesurée et des valeurs caractéristiques mises en mémoire, selon l'équation

$$h_{th} = (p - p_{AZ}) \cdot A_Z \cdot \frac{1}{k_{ges}}$$

et **en ce qu'**ensuite ledit jeu ($H_{LS}$) est calculé par dérivation de la différence de ladite course de pont mesurée ($H_x$) et de ladite course de pont théorique calculé ($h_{th}$).

4.  Procédé selon la revendication 2, **caractérisé en ce que** d'abord une course de pont théorique ($h_{th}$) est calculée par dérivation de la pression d'actionnement mesurée (p) et des valeurs caractéristiques mises en mémoire, selon l'équation

$$h_{th} = (p - p_{AZ}) \cdot A_Z \cdot \frac{i_H}{k_{ges}}$$

et **en ce qu'**ensuite ledit jeu ($H_{LS}$) est calculé par dérivation de la différence de ladite course de pont mesurée ($H_x$) et de ladite course de pont théorique calculé ($h_{th}$), à $i_H$ indiquant le rapport de transmission dudit levier rotatif.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004037771 A1
- DE 4212407 A1
- DE 19826133 A1
- DE 10322879 A1
- US 7152716 B2